# EUROPÄISCHE PATENTSCHRIFT

(11) **EP 3 724 007 B1**
(45) Veröffentlichungstag und Bekanntmachung des Hinweises auf die Patenterteilung: **08.12.2021**
(21) Anmeldenummer: 18785551.5
(22) Anmeldetag: 04.10.2018
(51) Int. Cl.: B60C 11/13

(54) **LAUFSTREIFENPROFIL EINES FAHRZEUGREIFENS**
TREAD PROFILE OF A VEHICLE TYRE
PROFIL DE BANDE DE ROULEMENT D'UN PNEU DE VÉHICULE

(30) Priorität: 11.12.2017 DE 102017222342
(43) Veröffentlichungstag der Anmeldung: 21.10.2020
(73) Patentinhaber: Continental Reifen Deutschland GmbH, 30165 Hannover (DE)
(72) Erfinder: KRISTEN, Florian, 30419 Hannover (DE); WÜST, Alexander, 30419 Hannover (DE)
(74) Vertreter: Continental Corporation
(86) Internationale Anmeldenummer: PCT/EP2018/076941
(87) Internationale Veröffentlichungsnummer: WO 2019/115048

(56) Entgegenhaltungen:
- EP-A1- 2 457 745
- EP-A2- 2 316 666

## Beschreibung

Die Erfindung betrifft ein Laufstreifenprofil eines Fahrzeugreifens ― insbesondere eines NFZ-Fahrzeugreifens ― mit durch Rillen voneinander getrennten Profilelementen, die nach radial außen von einer radial äußeren Oberfläche begrenzt werden und mit zusätzlichen seichten Nuten, die in der radial äußeren Oberfläche von Profilelementen ausgebildet und in radialer Richtung nach innen hin von einem Nutgrund begrenzt sind, und längs der Erstreckung der Nut ausgehend von einer Position der größten Tiefe der Nut bis zu dem vom tiefsten Punkt wegweisenden Erstreckungsende der Nut mit abnehmender Tiefe ausgebildet ist.

Derartige Fahrzeugreifen sind bekannt. Es ist bekannt, zur Verbesserung des Griffs im Offroad-Einsatz in der radial äußeren Oberfläche von durch Rillen begrenzten Profilelementen von Fahrzeugluftreifen von Nutzfahrzeugen zusätzlich seichte Nuten auszubilden. Gerade im Offroad-Einsatz kann dabei Material des befahrenen Untergrundes in die Nut eindringen. Nutflanken ermöglichen zusätzlichen Griff des Reifens und somit verbesserte Traktion bzw. Bremswirkung im Offroad-Einsatz. Dabei kann durch die seichte Ausbildung der Nuten die hohe, gewünschte Steifigkeit des Profilelementes im Einsatz der Nutzfahrzeuge ohne zusätzliche Maßnahmen sicher umgesetzt werden. Die üblichen Ausbildungen derartiger Fahrzeugluftreifen von Nutzfahrzeugen mit seichten Nuten in erhabenen Profilelementen sind jedoch mit relativ scharfkantigen Übergängen zwischen Nutflanken und Nutgrund ausgebildet, wodurch Rissbildungen im Nutgrund begünstigt werden können. Gerade im Offroad-Einsatz von Nutzfahrzeugreifen kann dies zu einer noch unerwünscht starken Abnutzung und zu einem unerwünscht frühzeitigen Ausfall des Reifens beitragen und die Haltbarkeitsdauer somit reduzieren.

Aus der JP 2012035664 A ist es von einem Pkw-Fahrzeugreifen bekannt, derartig seichte Nuten in der radial äußeren Oberfläche von durch Rillen begrenzten Profilblockelementen auszubilden, wobei der Nutgrund ausgehend vom tiefsten Punkt der Nut längs seiner Erstreckung bis zu dem von der Position des tiefsten Punktes wegweisend ausgebildeten Erstreckungsende konstant ansteigt. Das Erstreckungsende des Nutgrundes endet dabei mit ausgeprägtem, radialem Abstand von der radial äußeren Oberfläche des Profilblockelementes. Vom Erstreckungsende ist somit ein gestufter Übergang zur radial äußeren Oberfläche ausgebildet. Die Ausbildung ermöglicht zwar aufgrund des ansteigenden Verlaufes des Nutgrundes eine verbesserte Spannungsverteilung und trotz der Bereitstellung von Griffkanten eine hohe Steifigkeit des Profilblockelementes. Allerdings ist auch bei dieser Ausbildung der in Erstreckungsrichtung der Umfangsrille ausgebildete Übergang zwischen Nutgrund und radial äußerer Oberfläche unstetig und im Nutgrund scharfkantig ausgebildet, wodurch Rissbildungen im Nutgrund begünstigt werden können. Eine derartige Ausbildung wäre somit gerade bei einem Offroad-Einsatz von Nutzfahrzeugreifen weiterhin mit eingeschränkter Haltbarkeit im Rillengrund verbunden.

**Aus der** EP 2 457 745 A1 **ist ein Laufstreifenprofil gemäß den Merkmalen des Oberbegriffs des Anspruchs 1 bekannt.**

Der Erfindung liegt die Aufgabe zugrunde, die Ausbildung derartiger Fahrzeugreifen unter Nutzung der Vorteile von seichten Nuten insbesondere für den Offroad-Einsatz bei Nutzfahrzeugen unter Reduzierung des Rissbildungspotentials zu ermöglichen.

Die Aufgabe wird erfindungsgemäß durch die Ausbildung eines Laufstreifenprofils eines Fahrzeugreifens ― insbesondere eines NFZ-Fahrzeugreifens ― mit durch Rillen voneinander getrennten Profilelementen, die nach radial außen von einer radial äußeren Oberfläche begrenzt werden und mit zusätzlichen seichten Nuten, die in der radial äußeren Oberfläche von Profilelementen ausgebildet und in radialer Richtung nach innen hin von einem Nutgrund begrenzt sind, und längs der Erstreckung der Nut ausgehend von einer Position der größten Tiefe der Nut bis zu dem vom tiefsten Punkt wegweisenden Erstreckungsende der Nut mit abnehmender Tiefe ausgebildet ist, gemäß den Merkmalen von Anspruch 1 gelöst, bei dem der Nutgrund längs der Erstreckung der Nut ausgehend von einer Position der größten Tiefe der Nut bis zu dem vom tiefsten Punkt wegweisenden Position der größten Tiefe der Nut bis zu dem vom tiefsten Punkt wegweisenden Erstreckungsende der Nut mit abnehmender Tiefe ausgebildet ist, gemäß den Merkmalen von Anspruch 1 gelöst.

Durch diese Ausbildung wird ermöglicht, dass der Fahrzeugreifen mit durch Rillen begrenzten Profilelementen unter Nutzung der vorteilhaften Ausbildung einer seichten Nut in der radial äußeren Oberfläche eines Profilelementes zur Erzielung guter Griffeigenschaften bei hoher Steifigkeit weiterhin umgesetzt werden kann. Der Tiefenverlauf der Nut längs ihrer Erstreckung ausgehend vom tiefsten Punkt bis zu dem vom tiefsten Punkt wegweisenden Erstreckungsende der Nut ermöglicht dabei durch seine stetig ansteigende Ausbildung und durch den degressiv ansteigenden Tiefenverlauf bis zum Erstreckungsende mit tangentialem Übergang zur radial äußeren Oberfläche einen besonders günstigen Spannungsverlauf und in Erstreckungsrichtung der Nut ohne scharfkantige Übergänge zur Oberfläche. Der gekrümmt degressiv ansteigende Tiefenverlauf mit tangentialem Übergang ermöglicht dabei eine optimale spannungsminimierte Einleitung von Kräften in den Nutgrund. Somit kann auch im Offroad-Einsatz die Rissbildungsgefahr im Nutgrund weiter reduziert und die Haltbarkeit verbessert werden. **Der Flankenverlauf ermöglicht einen vollständig kantenfreien Übergang in die radial äußere Oberfläche an dem Erstreckungsende der Nut.**

Die Umsetzung und der Einsatz von Nutzfahrzeugreifen, wie sie für Fahrzeuge im Baustellen-, Construction-, "unter Tage" bzw. Bergbau - Betrieb oder anderen Off the Road ― Einsätzen gewünscht werden, kann somit weiter verbessert werden.

Besonders vorteilhaft ist die Ausbildung eines Fahrzeugreifens gemäß den Merkmalen von Anspruch 2, wobei der Nutgrund längs der Erstreckung der Nut ausgehend von einer Position der größten Tiefe der Nut bis zu dem vom tiefsten Punkt wegweisenden Erstreckungsende der Nut in einem ― insbesondere ausgehend von einer Position der größten Tiefe der Nut ausgehenden bis zum ersten Erstreckungsende erstreckten ― zweiten Erstreckungsabschnitt mit einem im Wesentlichen geradlinig ansteigenden Tiefenverlauf ausgebildet ist. Hierdurch kann der Abrieb der Nut vergleichmäßigt und die Wirkung der Griffkanten lange aufrechterhalten werden.

Besonders vorteilhaft ist die Ausbildung eines Fahrzeugreifens gemäß den Merkmalen von Anspruch **3**, wobei der Tiefenverlauf der Nut längs ihrer gesamten Erstreckung ausgehend von der Position der größten Tiefe bis zu dem vom tiefsten Punkt wegweisenden Erstreckungsende der Nut in der radial äußeren Oberfläche mit gekrümmt degressiv ansteigendem Tiefenverlauf ausgebildet ist. Hierdurch kann sowohl Abrieb der Nut vergleichmäßigt und die Wirkung der Griffkanten lange aufrechterhalten als auch die Spannungsverteilung im Nutgrund weiter verbessert werden.

Besonders vorteilhaft ist die Ausbildung eines Fahrzeugreifens gemäß den Merkmalen von Anspruch **4**, wobei der Tiefenverlauf der Nut längs ihrer Erstreckung ausgehend von der Position der größten Tiefe bis zu dem vom tiefsten Punkt wegweisenden Erstreckungsende der Nut in der radial äußeren Oberfläche gekrümmt ansteigend mit einem Wendepunkt der Krümmungsrichtung ausgebildet ist, wobei insbesondere der Nutgrund längs der Erstreckung der Nut ausgehend von der Position der größten Tiefe der Nut in einem bis zum ersten Erstreckungsende erstreckten, zweiten Erstreckungsabschnitt mit gekrümmt progressiv ansteigendem Tiefenverlauf und im Übergang zwischen zweitem und erstem Erstreckungsabschnitt der Wendepunkt der Krümmungsrichtung des Tiefenverlaufes ausgebildet ist. Hierdurch kann die Spannung im Nutgrund minimiert und wirksame Griffkanten trotz Abrieb lange aufrechterhalten werden.

Besonders vorteilhaft ist die Ausbildung eines Fahrzeugreifens gemäß den Merkmalen von Anspruch **5**, wobei die Nut längs ihrer Erstreckung beiderseits des Nutgrundes jeweils von eine Nutflanke begrenzt wird, die sich von der radial äußeren Oberfläche in radialer Richtung R nach innen jeweils unter Einschluss eines in den Schnittebenen senkrecht zur Erstreckungsrichtung der Nut gemessenen Neigungswinkels zur radialen Richtung R bis zum Nutgrund erstrecken, wobei längs der Erstreckung der Nut in den Schnittebenen senkrecht zur Erstreckungsrichtung der Nut die eine Flanke mit einem Neigungswinkel α ausgebildet ist, dessen in der Nut ausgebildetes Minimum αₘᵢₙ mit 20°≤αₘᵢₙ≤60° ist, und die andere Flanke mit einem Neigungswinkel β, dessen in der Nut ausgebildetes Minimum βₘᵢₙ mit 20°≤ βₘᵢₙ ≤60° ausgebildet.

Besonders vorteilhaft ist die Ausbildung eines Fahrzeugreifens gemäß den Merkmalen von Anspruch **6**, wobei längs der Erstreckung der Nut ausgehend vom tiefsten Punkt der Nut bis zu vom tiefsten Punkt wegweisenden in der radial äußeren Oberfläche ausgebildeten Erstreckungsende der Nut sich die beiden Flanken an ihrem radial inneren Erstreckungsende schneiden und dabei in der Schnittlinie einen linienförmigen Nutgrund bilden.

Besonders vorteilhaft ist die Ausbildung eines Fahrzeugreifens gemäß den Merkmalen von Anspruch **7**, wobei die beiden Flanken längs der Erstreckung der Nut ausgehend vom tiefsten Punkt der Nut bis zu vom tiefsten Punkt wegweisenden in der radial äußeren Oberfläche ausgebildeten Erstreckungsende der Nut hin in den senkrecht zur Erstreckungsrichtung gebildeten Schnittebenen mit Abstand zu einander schneiden, welcher die Breite des Nutgrundes bildet, wobei der Abstand und somit die Breite des Nutgrundes längs der Erstreckung der Nut ausgehend vom tiefsten Punkt der Nut in Richtung zu dem vom tiefsten Punkt wegweisenden in der radial äußeren Oberfläche ausgebildeten Erstreckungsende der Nut hin abnehmend ausgebildet ist.

Besonders vorteilhaft ist die Ausbildung eines Fahrzeugreifens gemäß den Merkmalen von Anspruch **8**, wobei mehrere - insbesondere zwei - derartige im Profilelement ausgebildete Nuten in der Position ihres tiefsten Punktes unter Einschluss eines Winkels δ ihrer Erstreckungsrichtung in einander münden.

Besonders vorteilhaft ist die Ausbildung eines Fahrzeugreifens gemäß den Merkmalen von Anspruch **9**, wobei zwei derartige im Profilelement ausgebildete Nuten in der Position ihres tiefsten Punktes unter Einschluss eines Winkels δ mit 45°≤δ≤135° ihrer Erstreckungsrichtung in einander münden. Hierdurch können Umfangs- und Querkräfte aufgenommen werden.

Besonders vorteilhaft ist die Ausbildung eines Fahrzeugreifens gemäß den Merkmalen von Anspruch **10**, wobei die Position des tiefsten Punktes der Nut in einer das Profilelement begrenzenden Rillenwand positioniert ist. Hierdurch kann Wasser aus der Nut optimal in die Rille abgeleitet werden.

Besonders vorteilhaft ist die Ausbildung eines Fahrzeugreifens gemäß den Merkmalen von Anspruch **11**, wobei die Position des tiefsten Punktes der Nut mit Abstand zu den das Profilelement begrenzenden Rillen positioniert ist. Hierdurch kann ungleichmäßigem Abrieb optimal entgegengewirkt werden.

Besonders vorteilhaft ist die Ausbildung eines Fahrzeugreifens gemäß den Merkmalen von Anspruch **12**, wobei das Laufstreifenprofil als Offroadprofil ausgebildet ist.

Die Erfindung wird im Folgenden an Hand der in den Figuren 1 bis 8 dargestellten Ausführungsbeispiele näher erläutert. Hierin zeigen
- Fig.1: einen Umfangsabschnitt eines Nutzfahrzeugluftreifens in Draufsicht,
- Fig.2: das Laufstreifenprofil des Nutzfahrzeugreifens von Fig.1 in Schnittdarstellung gemäß Schnitt II-II von Fig.1,
- Fig. 3: einen Ausschnitt eines Profilelementabschnitts von Fig.1 in perspektivischer Darstellung zur Erläuterung der Nutausbildung in einer Ausführung,
- Fig.4: einen anderen Ausschnitt eines Profilelementes von Fig.1 in perspektivischer Darstellung zur Erläuterung der Nutausführung in alternativer Ausführung,
- Fig.5: ein Profilelement von Fig.1 in Schnittdarstellung gemäß Schnitt V-V von Fig.1 zur Erläuterung des Tiefenverlaufs einer Nut,
- Fig. 6: ein Profilelement von Fig.1 in Schnittdarstellung gemäß Schnitt V-V von Fig.1 zur Erläuterung eines alternativen Tiefenverlaufes einer Nut,
- Fig. 7: die Draufsicht auf einen Abschnitt eines Laufstreifenprofils eines anderen Offroad-Nutzfahrzeugreifens für den Einsatz in Baustellen (Construction-Tire) und
- Fig.8: ein Profilelement von Fig.7 in Schnittdarstellung gemäß Schnitt VIII-VIII von Fig.7 zur Erläuterung des Tiefenverlaufes einer Nut in weiterer Ausführung.

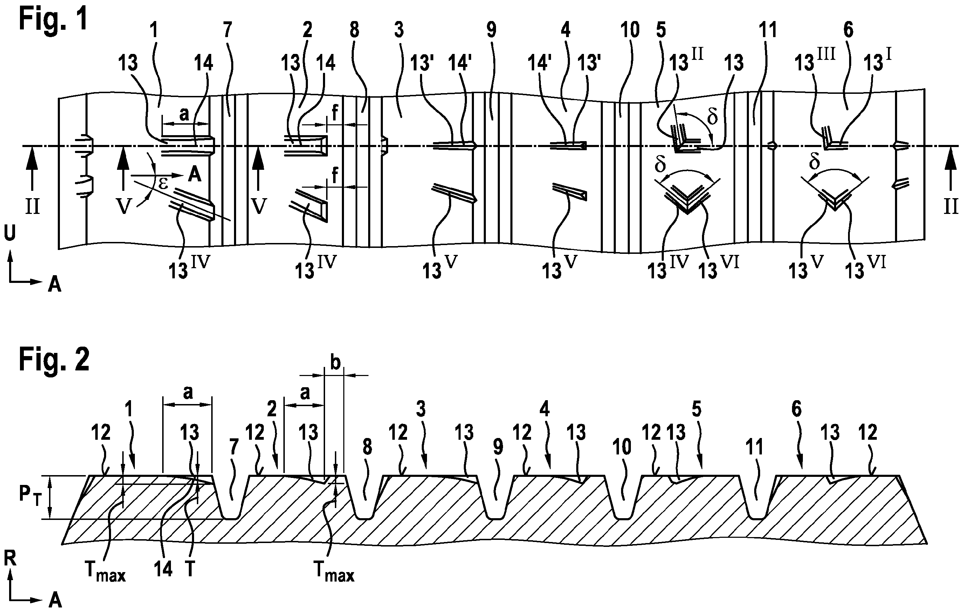

Die Figuren 1 und 2 zeigen einen Umfangsabschnitt eines Laufstreifenprofils eines Nutzfahrzeugluftreifens mit mehreren in axialer Richtung A des Fahrzeugluftreifens nebeneinander angeordneten Umfangsrippen bekannter Art. Die Umfangsrippen 1, 2, 3,4,5 und 6 sind über den Umfang des Fahrzeugluftreifens erstreckte und in Umfangsrichtung U des Fahrzeugluftreifens ausgerichtete Profilrippen, die in axialer Richtung A des Fahrzeugluftreifens jeweils in bekannter Weise durch Umfangsrillen 7, 8, 9, 10 bzw. 11 voneinander getrennt sind.

Dabei sind die Umfangsrippen 1 und 6 jeweils in einer Reifenschulter des Fahrzeugluftreifens ausgebildet und bilden die Schulterrippen. Die Umfangsrippen 2, 3, 4 und 5 sind in axialer Richtung A zwischen den beiden Schulterrippen 1 und 6 ausgebildet. Die Umfangsrippe 1 und die Umfangsrippe 2 sind in axialer Richtung A durch die in Umfangsrichtung U erstreckte und in Umfangsrichtung U ausgerichtete Umfangsrille 7 bekannter Art voneinander getrennt. Die Umfangsrippe 2 und die Umfangsrippe 3 sind in axialer Richtung A durch eine über den gesamten Umfang erstreckte und in Umfangsrichtung U ausgerichtete Umfangsrille 8 bekannter Art voneinander getrennt. Die Umfangsrippe 3 und die Umfangsrippe 4 sind in axialer Richtung A durch eine über den gesamten Umfang des Fahrzeugluftreifens erstreckte und in Umfangsrichtung U ausgerichtete Umfangsrille 9 axial voneinander getrennt. Die Umfangsrippe 4 und die Umfangsrippe 5 sind in axialer Richtung A des Fahrzeugluftreifens durch eine über den gesamten Umfang des Fahrzeugluftreifens erstreckte und Umfangsrichtung U ausgerichtete Umfangsrille 10 voneinander getrennt. Die Umfangsrippe 5 und die Umfangsrippe 6 sind in axialer Richtung A des Fahrzeugluftreifens durch eine über den gesamten Umfang des Fahrzeugluftreifens erstreckte und in Umfangsrichtung U ausgerichtete Umfangsrille 11 voneinander getrennt.

Die Umfangsrippen 1, 2, 3, 4, 5 und 6 sind in radialer Richtung R des Fahrzeugluftreifens nach außen hin durch eine die Bodenkontaktoberfläche bildende radial äußere Oberfläche 12 begrenzt.

Die Umfangsrillen 7, 8, 9, 10 und 11 sind in bekannter Weise in radialer Richtung R nach innen hin durch eine über den Umfang des Fahrzeugluftreifens erstreckten Rillengrund derart begrenzt. Die Umfangsrillen 7, 8, 9, 10 und 11 sind mit einer in radialer Richtung R des Fahrzeugluftreifens gemessenen Tiefe P_{T} ausgebildet, welche der Profiltiefe des Reifens entspricht.

Wie in den Figuren 1 und 2 dargestellt ist, sind in der radial äußeren Oberfläche 12 der Umfangsrippen 1 bis 6 jeweils zusätzliche seichte Nuten 13 ausgebildet. Dabei sind in den Fig.1 und Fig. 2 in den verschiedenen Umfangsrippen 1 bis 6 zur Erläuterung beispielhaft unterschiedliche Ausführungsformen derartiger seichter Nuten dargestellt.

Wie in Fig.1 und Fig.2 zu erkennen ist, sind in der Umfangsrippe 1 über den Umfang des Fahrzeugluftreifens verteilte und in Umfangsrichtung U hintereinander angeordnete Nuten 13 ausgebildet, die sich von der die Umfangsrippe 1 in axialer Richtung A begrenzenden Umfangsrille 7 ausgehend in axialer Richtung A nach außen hin in Erstreckungsrichtung der Nut 13 mit einer Erstreckungslänge a, die in der radial äußeren Oberfläche 12 gemessenen wird, erstrecken.

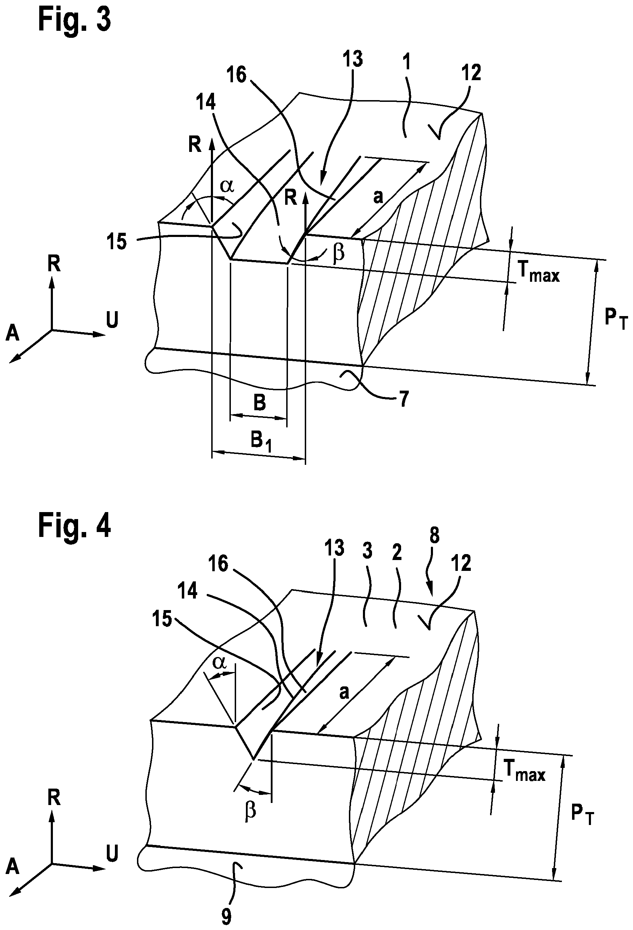

Wie in Fig.1, in Fig.2 und in Fig.3 dargestellt ist, ist die Nut 13 in radialer Richtung R nach innen hin jeweils durch einen Nutgrund 14 begrenzt. Der Nutgrund 14 ist dabei von der die Umfangsrippe 1 zur Umfangsrille 7 hin begrenzenden Rillenwand der Umfangsrille 7 ausgehend längs der Erstreckung der Nut 13 in Erstreckungsrichtung der Nut in der radial äußeren Oberfläche 12 über die Erstreckungslänge a der Nut 13 geradlinig erstreckt ausgebildet und in axialer Richtung A des Fahrzeugluftreifens ausgerichtet. In den längs der Erstreckungsrichtung der Nut 13 gebildeten Schnittebenen ist die Nut 13 - wie in den Figuren 2, 3 und 5 zu erkennen ist - ausgehend von der die Umfangsrippe 1 begrenzenden Rillenwand der Umfangsrille 7 längs der Erstreckung der Nut 13 über die Erstreckungslänge a hin mit einem stetig in radialer Richtung R ansteigendem Rillengrund 14 und somit mit einem stetig abnehmenden Verlauf der in radialer Richtung R gemessenen Tiefe T der Nut 13 ausgebildet. Die Nut 13 ist in der Position der Rillenwand mit dem Maximum Tₘₐₓ ihrer Tiefe ausgebildet. Von dieser Position ausgehend ist die Nut 13 längs ihrer Erstreckung über die gesamte Erstreckungslänge a hinweg mit abnehmendem Tiefenverlauf ausgebildet.

Fig.2 zeigt die Nut 13 der Umfangsrippe 1 in einer Ausführungsform, bei der die Nut 13 längs ihrer gesamten Erstreckung in der Umfangsrippe 1 ausgehend der Position in der Rillenwand, in der die Tiefe der Nut mit ihrem Maximalwert Tₘₐₓ ausgebildet ist, bis zu ihrem Erstreckungsende hin mit einem gekrümmten, degressiv abnehmenden Tiefenverlauf ausgebildet ist. Der Nutgrund 14 ist bei diesem Ausführungsbeispiel in den längs der Erstreckungsrichtung der Nut gebildeten Schnittebenen längs seiner gesamten Erstreckung um einen in einer radialen Position unterhalb des Nutgrundes 14 positionierten, nicht dargestellten Krümmungsmittelpunkt gekrümmt ausgebildet. Am Erstreckungsende der Nut 13 im Abstand a von der Umfangsrille 7 geht der Nutgrund 14 dabei tangential in die radial äußere Oberfläche 12 der Umfangsrippe 1 über.

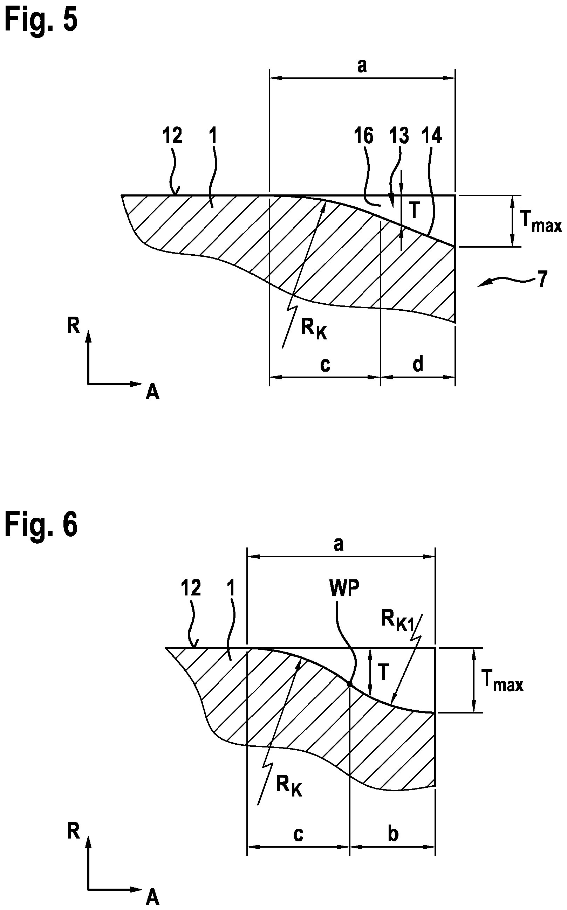

In Fig. 5 ist eine alternative Ausbildung des Tiefenverlaufs des Nutgrundes 14 der Nut 13 dargestellt, bei der der Nutgrund 14 ausgehend von der Position seiner maximalen Tiefe Tₘₐₓ, die in der Rillenwand der Umfangsrille 7 ausgebildet ist, in einem ersten Erstreckungsabschnitt der in Erstreckungsrichtung der Nut 13 in der radial äußeren Oberfläche 12 gemessenen Erstreckungslinie d geradlinig und somit konstant ansteigt und in einem daran anschließenden zweiten Erstreckungsabschnitt der Erstreckungslänge c, der sich bis zu dem vom tiefsten Punkt der Nut 13 wegweisenden Erstreckungsende im Abstand a mit a = (c+d) von der Position des tiefsten Punktes uns somit von der Umfangsrille 7 erstreckt, wie in dem in Fig. 2 dargestellten und oben beschriebenen Form um einen in einer radialen Position unterhalb des Nutgrundes 14 positionierten, nicht dargestellten Krümmungsmittelpunkt gekrümmt ausgebildet ist und an diesem vom tiefsten Punkt der Nut 13 wegweisenden Erstreckungsende im Abstand a von der Position des tiefsten Punktes tangential in die radial äußere Oberfläche 12 übergeht. Die Nut 13 ist bei diesem Ausführungsbeispiel somit längs ihrer Erstreckung ausgehend von der Position ihrer größten Tiefe im ersten Erstreckungsabschnitt mit konstant abnehmendem und im anschließenden, zweiten Erstreckungsabschnitt bis zum Erstreckungsende hin mit einem gekrümmten, degressiv abnehmenden Tiefenverlauf ausgebildet.

Die Erstreckungslänge a ist dabei mit 5mm ≤ a ≤ 50mm ausgebildet.

Im Ausführungsbeispiel von Fig. 5 ist die Erstreckungslänge d mit 2,5mm ≤ d ≤ 47,5mm und c mit 2,5mm ≤ c ≤ 47,5mm ausgebildet.

Bei üblichen Anforderungen ist die Ausbildung der Erstreckungslänge a mit 10mm ≤ a ≤ 35mm gewählt.

Beispielsweise ist a=18mm, c= 9mm und d=9mm gewählt.

Fig. 6 zeigt eine weitere alternative Ausführung des Tiefenverlaufs der Nut 13, bei welcher Nutgrund 14 ausgehend von der Position des tiefsten Punktes Tₘₐₓ in Erstreckungsrichtung der Nut 13 über einen ersten Erstreckungsabschnitt der Erstreckungslänge b der um einen radial außerhalb des Nutgrundes 14 gebildeten Krümmungsmittelpunkt gekrümmt und somit die Nut mit einem progressiv abnehmendem Tiefenverlauf ausgebildet ist. Am Erstreckungsende dieses ersten Erstreckungsabschnitts der Erstreckungslänge b ist der Tiefenverlauf mit einem Wendepunkt WP ausgebildet. Ab dieser Position schließt sich ein zweiter Erstreckungsabschnitt der Erstreckungslänge c an, welcher sich bis zum Erstreckungsende der Nut 13 im Abstand a von der Position des tiefsten Punktes erstreckt. In diesem zweiten Erstreckungsabschnitt ist der Nutgrund 14, wie im oben beschriebenen Ausführungsbeispiel von Fig.5 beschrieben, um einen in einer radialen Position unterhalb des Nutgrundes 14 positionierten, nicht dargestellten Krümmungsmittelpunkt gekrümmt und somit die Nut 13 mit degressiv abnehmendem Tiefenverlauf gekrümmt ausgebildet. An diesem vom tiefsten Punkt der Nut 13 wegweisenden Erstreckungsende der Nut 13 im Abstand a von der Position des tiefsten Punktes geht der Nutgrund 14 tangential in die radial äußere Oberfläche 12 über. Dabei ist a = (b+c).

Die Erstreckungslänge a ist dabei mit 10mm ≤ a ≤ 35mm ausgebildet. Im Ausführungsbeispiel von Fig.6 ist die Erstreckungslänge b mit 2,5mm ≤ b ≤ 47,5mm und c mit 2,5mm ≤ c ≤ 47,5mm ausgebildet.

Wie in Fig. 3 dargestellt ist, ist der Nutgrund 14 der Nut 13 mit einer quer zur Erstreckungsrichtung der Nut 13 gemessenen Erstreckungsbreite B ausgebildet. Beiderseits des Nutgrundes 14 ist die Nut jeweils von einer Nutflanke 15 bzw. 16 begrenzt, welche in den senkrecht zur Erstreckungsrichtung der Nut gebildeten Schnittebenen jeweils unter Einschluss eines Neigungswinkels α bzw. β zur radialen Richtung R geneigt sind. Dabei ist die Flanke 15 unter Einschluss des Neigungswinkels α und die Flanke 16 unter Einschluss des Neigungswinkels β geneigt ausgebildet. Dabei ist die Neigungsrichtung der Flanken 15 bzw. 16 jeweils so ausgebildet, dass die Flanken 15 bzw.16 längs der radialen Erstreckung der Nut 13 ausgehend vom Nutgrund 14 in Richtung zur radial äußeren Oberfläche 12 hin in der von der Nut 13 wegweisenden Richtung geneigt sind. Die Neigungswinkel α und β der Nut 13 sind dabei in der Position des tiefsten Punktes mit der Tiefe Tₘₐₓ mit ihrem minimalen Wert αₘᵢₙ und βₘᵢₙ ausgebildet und nehmen längs der Erstreckung der Nut 13 über den gesamten Erstreckungsabschnitt der Erstreckungslänge a bis zu dem von dem tiefsten Punkt wegweisenden Erstreckungsende hin stetig zu und erreichen am Erstreckungsende ihr Maximum mit α = 90° und β = 90°. Die Flanke 15 und die Flanke 16 liegen somit am Erstreckungsende in der radial äußeren Oberfläche 12 und bilden einen fließenden Übergang zur radial äußeren Oberfläche 12.

Der Minimalwert αₘᵢₙ bzw. βₘᵢₙ in der Position des tiefsten Punktes der Nut 13 ist dabei mit 20° ≤ αₘᵢₙ ≤ 60° bzw. 20° ≤ βₘᵢₙ ≤ 60° ausgebildet. Beispielsweise ist αₘᵢₙ = 40° und βₘᵢₙ = 40° gewählt.

Dabei ist in einer symmetrischen Ausführung α = β gewählt.

In anderer, asymmetrischer Ausbildung ist αₘᵢₙ > βₘᵢₙ gewäht.

Die maximale Tiefe Tₘₐₓ ist mit (0,05 P_{T}) ≤ Tₘₐₓ ≤ (0,25 P_{T}) ausgebildet. In typischer Ausbildung üblicher Offroad-Nutzfahrzeugreifen ist (0,1 P_{T}) ≤ Tₘₐₓ ≤ (0,2 P_{T}) ausgebildet.

Die Profiltiefe P_{T} derartiger Nutzfahrzeugluftreifen sind dabei üblicher Weise mit 20mm ≤ P_{T} ≤ 25mm ausgebildet.

Der Nutgrund 14 ist in einer beispielhaften Ausbildung ausgehend von der Position des tiefsten Punktes Tₘₐₓ bis zu ihrem Erstreckungsende hin mit einer längs der Erstreckung des Nutgrundes gleichbleibenden Breite B ausgebildet.

In alternativer Ausbildung ist der Nutgrund 14 ausgehend von der Position des tiefsten Punktes der Nut 13, in welcher der Nutgrund seine maximale Breite B aufweist, längs der Erstreckung des Nutgrundes bis zu seinem Erstreckungsende hin mit kontinuierlich abnehmender Breite B ausgebildet.

Fig. 4 zeigt ein Ausführungsbeispiel einer Nut 13, bei welcher der Nutgrund 14 längs seiner gesamten Erstreckung ausgehend von der Position des tiefsten Punktes der Nut 13 bis zum Erstreckungsende der Nut 13 hin mit einer Breite B = 0 ausgebildet ist, so dass sich die Flanken 15 und 16 in einem linienförmigen ausgebildeten Nutgrund 14 schneiden. Die Nut 13 ist ansonsten - wie in den oben beschriebenen verschiedenen Ausführungen ― entsprechend den verschiedenen, alternativen Ausführungen ausgebildet.

Eine derartige Ausbildung einer Nut 13 ist in Fig.1 am Beispiel der Umfangsrippe 3 als Nut 13' mit Nutgrund 14' dargestellt.

In Fig. 1 ist eine weitere alternative Ausführung einer Nut 13 in Form der Nut 13^{IV} in der Umfangsrippe 1 dargestellt. Bei dieser Ausführungsform ist die Nut 13^{IV} mit ihrer Erstreckungsrichtung in der radial äußeren Oberfläche 12 unter Einschluss eines Winkels ε zur axialen Richtung A des Fahrzeugluftreifens geneigt ausgebildet mit 45° ≥ ε > 0°.

In analoger Weise ist in Fig. 1 das in der Umfangsrippe 3 gezeigte Ausführungsbeispiel einer Nut 13^{V} ein mit dem Winkel ε seiner Ausrichtung zur axialen Richtung A des Fahrzeugluftreifens geneigte alternative Ausführung zu des eingezeichneten Ausführungsbeispiels 13'.

Bei den bisher beschriebenen Ausführungsformen ist die Position des tiefsten Punktes der Nut 13 mit der Tiefe Tₘₐₓ jeweils in einer Rillenwand einer die Profilrippe begrenzenden Umfangsrille 7 bzw. 9 ausgebildet, so dass die Nut 13 bzw. 13^{IV} bzw. 13' bzw. 13^{V} jeweils mit ihrer tiefsten Punkte in die angrenzende Umfangsrille 7 bzw. 9 mündet.

In Fig. 1 ist in den Umfangsrippen 2 bzw. 4 jeweils eine alternative Ausbildung der Nuten 13 bzw. 13^{IV} bzw. 13' bzw. 13^{V} eingezeichnet. Bei diesen Ausführungsformen ist die Position des tiefsten Punktes der jeweiligen Nut 13 bzw. 13^{IV} bzw. 13' bzw. 13^{V} jeweils mit Abstand von der nächstliegenden angeordneten Umfangsrille 8 bzw. Umfangsrille 10 positioniert und bildet ein Erstreckungsende des Nutgrundes 14 und ein stumpfes Ende der Nut.

In der Umfangsrippe 5 ist ein Ausführungsbeispiel dargestellt, bei dem eine Nut 13 und eine Nut 13" derart angeordnet sind, dass sie einen gemeinsamen tiefsten Punkt aufweisen, Die eine Nut 13 erstreckt sich ausgehend von dieser Position des tiefsten Punktes in axialer Richtung A in Richtung zur Umfangsrille 11 hin. Die andere Nut 13" sich ausgehend von dieser Position des tiefsten Punktes in eine davon abweichende Erstreckungsrichtung unter Einschluss eines Winkels δ zur Erstreckungsrichtung der Nut 13 in der radial äußeren Oberfläche 12. Der Winkel δ ist mit 45° ≤ δ ≤ 135° ausgebildet ist. Der Winkel δ ist beispielsweise mit δ = 95° ausgebildet.

Wie in Fig.1 in der Umfangsrippe 5 zu erkennen ist, ist der die Nut 13" dabei in der dargestellten Ausführung mit wesentlicher in Umfangsrichtung U ausgerichteter Richtungskomponente erstreckt und die Nut 13 in axialer Richtung A ausgerichtet.

In Fig.1 ist in der Umfangsrippe 5 auch ein weiteres derartiges Ausführungsbeispiel mit gemeinsamem tiefsten Punkt gebildeten Nuten 13^{IV} und 13^{VI} dargestellt, bei dem die beiden Nuten 13^{IV} und 13^{VI} jedoch jeweils beide mit einer Erstreckungsrichtung sowohl mit deutlicher axialer Richtungskomponente als auch mit deutlicher Umfangsrichtungskomponente ausgerichtet sind. Beispielsweise sind beide Nuten unter Einschluss eines Winkels von 45° zur axialen Richtung A ausgerichtet.

In Fig. 1 sind in der Umfangsrippe 6 in analoger Weise zu den in Fig.5 dargestellten Ausführungsbeispielen Ausführungsbeispiele mit zwei Nuten 13' und 13^{III} bzw. 13^{V} und 13^{VI} dargestellt, die jeweils wie die Nuten 13' von Fig.4 mit einer Breite B des Nutgrundes mit B = 0 ausgebildet sind.

In den Figuren 1 und 2 sind die verschiedenen dargestellten und beschriebenen Ausführungsformen der in Profilelementen ausgebildeten Nuten anhand eines Nutzfahrzeugreifens mit Umfangsrippen und geradlinig erstreckten Umfangsrillen dargestellt.

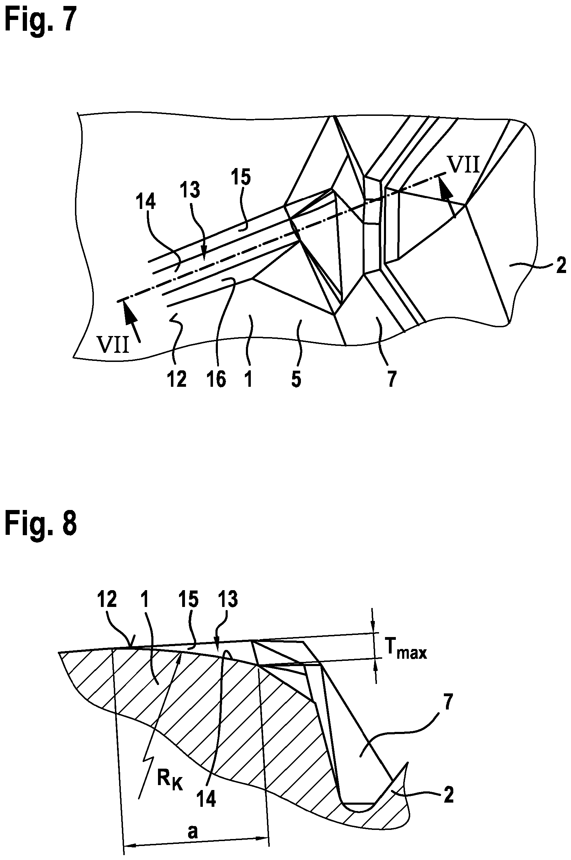

In den Figuren 7 und 8 ist ein Umfangsabschnitt eines anderen Laufstreifenprofils eines Nutzfahrzeugreifens (Truck-Reifen) mit stark ausgeprägtem Offroadprofil dargestellt mit von durch eine Umfangsrille begrenzten Profilblockelementen oder Profilrippen eines Nutzfahrzeugreifens (Truck-Reifen). Die Umfangsrillen des Laufstreifenprofils sind längs ihrer Erstreckung über den Umfang des Reifens hinweg mit einer Vielzahl von Knickstellen versehen und längs des geknickten Verlaufs der Umfangsrillen mit stark veränderten geneigten, z.T. zusätzliche Knickstellen aufweisenden Rillenwänden der Umfangsrillen ausgebildet. Derartige Laufstreifenprofile werden beispielsweise bei Nutzfahrzeug-Off-the-Road-Reifen von Fahrzeugen im Baustellen-, Construction-, "unter Tage" bzw. Bergbau - Betrieb eingesetzt.

In den Figuren 7 und 8 ist dabei ein Ausführungsbeispiel der Nut 13 in einer Umfangsrippe dargestellt, deren Tiefenverlauf analog zur Darstellung der in Fig. 3 dargestellten Nut 13 ausgebildet ist.

### Bezugszeichenliste

- 1: Profilrippe
- 2: Profilrippe
- 3: Profilrippe
- 4: Profilrippe
- 5: Profilrippe
- 6: Profilrippe
- 7: Umfangsrille
- 8: Umfangsrille
- 9: Umfangsrille
- 10: Umfangsrille
- 11: Umfangsrille
- 12: Radial äußere Oberfläche
- 13: , 13^{I}, 13^{II}, 13^{III}, 13^{IV}, 13^{V,} 13^{VI} Nut
- 14: , 14' Nutgrund
- 15: Flanke
- 16: Flanke
- 17: Querrille
- 18: Feineinschnitt
- 19: Haupterstreckungsabschnitt
- 20: Randerstreckungsabschnitt
- 21: Feineinschnittsgrund
- 22: Rillengrund
- 23: Feineinschnittswand
- 24: Feineinschnittswand

## Patentansprüche

1. Laufstreifenprofil eines Fahrzeugreifens ― insbesondere eines NFZ-Fahrzeugreifens ― mit durch Rillen (7,8,9,10,11) voneinander getrennten Profilelementen (1,2,3,4,5,6), die nach radial außen von einer radial äußeren Oberfläche (12) begrenzt werden und mit zusätzlichen seichten Nuten (13), die in der radial äußeren Oberfläche (12) von Profilelementen (1,2,3,4,5,6) ausgebildet und in radialer Richtung R nach innen hin von einem Nutgrund (14) begrenzt sind, und längs der Erstreckung der Nut (13) ausgehend von einer Position der größten Tiefe T_{MAX} der Nut (13) bis zu dem vom tiefsten Punkt wegweisenden Erstreckungsende der Nut (13) mit abnehmender Tiefe T ausgebildet ist, wobei der Nutgrund (14) längs der Erstreckung der Nut (13) ausgehend von einer Position der größten Tiefe T_{MAX} der Nut (13) bis zu dem vom tiefsten Punkt wegweisenden Erstreckungsende der Nut (13), welches in der radial äußeren Oberfläche (12) ausgebildet ist, mit einem stetig ansteigenden Tiefenverlauf ausgebildet ist, und **wobei zumindest in einem ersten Erstreckungsabschnitt, der bis zum Erstreckungsende in der radial äußeren Oberfläche (12) reicht, der Tiefenverlauf des Nutgrundes (14) gekrümmt degressiv ansteigend und mit tangentialem Übergang zur radial äußeren Oberfläche (12) ausgebildet ist,**
**wobei der Tiefenverlauf der Nut (13) längs ihrer gesamten Erstreckung ausgehend von der Position der größten Tiefe T_{MAX} bis zu dem vom tiefsten Punkt wegweisenden Erstreckungsende der Nut (13) in der radial äußeren Oberfläche (12) mit gekrümmt ansteigendem Tiefenverlauf ausgebildet ist,** wobei die Nut längs ihrer Erstreckung beiderseits des Nutgrundes jeweils von einer Nutflanke begrenzt wird, die sich von der radial äußeren Oberfläche in radialer Richtung R nach innen jeweils unter Einschluss eines in den Schnittebenen senkrecht zur Erstreckungsrichtung der Nut gemessenen Neigungswinkels zur radialen Richtung R bis zum Nutgrund erstrecken, wobei längs der Erstreckung der Nut in den Schnittebenen senkrecht zur Erstreckungsrichtung der Nut die eine Flanke mit einem Neigungswinkel α, dessen in der Nut ausgebildetem Minimum αmin, und die andere Flanke mit einem Neigungswinkel β, dessen in der Nut ausgebildetem Minimum βmin ausgebildet ist, **dadurch gekennzeichnet, dass** längs der Erstreckung der Nut (13) ausgehend von der Position des tiefsten Punktes T_{MAX}, in welchem α mit αₘᵢₙ und β mit βₘᵢₙ ausgebildetist, bis zu dem vom tiefsten Punkt wegweisenden in der radial äußeren Oberfläche (12) ausgebildeten Erstreckungsende der Nut (13) wenigstens eine ― insbesondere beide ― Flanke(n) (15,16) mit ― insbesondere kontinuierlich ― zunehmendem Flankenwinkel ausgebildet sind, wobei im Erstreckungsende der bzw. die Flankenwinkel ihren Maximalwert von 90° aufweisen.

2. Laufstreifenprofil gemäß den Merkmalen von Anspruch 1,
wobei der Nutgrund (14) längs der Erstreckung der Nut (13) ausgehend von einer Position der größten Tiefe T_{MAX} der Nut (13) bis zu dem vom tiefsten Punkt wegweisenden Erstreckungsende der Nut (13) in einem ― insbesondere ausgehend von einer Position der größten Tiefe T_{MAX} der Nut (13) ausgehenden bis zum ersten Erstreckungsende erstreckten ― zweiten Erstreckungsabschnitt mit einem im Wesentlichen geradlinig ansteigenden Tiefenverlauf ausgebildet ist.

3. Laufstreifenprofil gemäß den Merkmalen von **Anspruch 1,**
wobei der Tiefenverlauf der Nut (13) längs ihrer gesamten Erstreckung ausgehend von der Position der größten Tiefe T_{MAX} bis zu dem vom tiefsten Punkt wegweisenden Erstreckungsende der Nut (13) in der radial äußeren Oberfläche (12) mit gekrümmt degressiv ansteigendem Tiefenverlauf ausgebildet ist.

4. Laufstreifenprofil gemäß den Merkmalen von Anspruch 3,
wobei der Tiefenverlauf der Nut (13) längs ihrer Erstreckung ausgehend von der Position der größten Tiefe T_{MAX} bis zu dem vom tiefsten Punkt wegweisenden Erstreckungsende der Nut (13) in der radial äußeren Oberfläche (12) gekrümmt ansteigend mit einem Wendepunkt WP der Krümmungsrichtung ausgebildet ist, wobei insbesondere der Nutgrund (14) längs der Erstreckung der Nut (13) ausgehend von der Position der größten Tiefe T_{MAX} der Nut (13) in einem bis zum ersten Erstreckungsende erstreckten, zweiten Erstreckungsab schnitt mit gekrümmt progressiv ansteigendem Tiefenverlauf und im Übergang zwischen zweitem und erstem Erstreckungsabschnitt der Wendepunkt der Krümmungsrichtung des Tiefenverlaufes ausgebildet ist.

5. Laufstreifenprofil gemäß den Merkmalen von einem der vorangegangenen Ansprüche,
wobei das Minimum αₘᵢₙ mit 20°≤αₘᵢₙ≤60° und das Minimum βₘᵢₙ mit 20°≤ βₘᵢₙ ≤60° ausgebildet ist.

6. Laufstreifenprofil gemäß den Merkmalen von einem der vorangegangenen Ansprüche,
wobei längs der Erstreckung der Nut (13) ausgehend vom tiefsten Punkt der Nut (13) bis zu vom tiefsten Punkt wegweisenden in der radial äußeren Oberfläche (12) ausgebildeten Erstreckungsende der Nut (13) sich die beiden Flanken (15,16) an ihrem radial inneren Erstreckungsende schneiden und dabei in der Schnittlinie einen linienförmigen Nutgrund (14) bilden.

7. Laufstreifenprofil gemäß den Merkmalen von einem oder mehreren der Ansprüche 1 **bis 5**,
wobei die beiden Flanken (15,16) längs der Erstreckung der Nut (13) ausgehend vom tiefsten Punkt der Nut bis zu vom tiefsten Punkt wegweisenden in der radial äußeren Oberfläche (12) ausgebildeten Erstreckungsende der Nut (13) hin in den senkrecht zur Erstreckungsrichtung gebildeten Schnittebenen mit Abstand zu einander schneiden, welcher die Breite B des Nutgrundes (14) bildet, wobei der Abstand und somit die Breite B des Nutgrundes (14) längs der Erstreckung der Nut (13) ausgehend vom tiefsten Punkt der Nut (13) in Richtung zu dem vom tiefsten Punkt wegweisenden in der radial äußeren Oberfläche (12) ausgebildeten Erstreckungsende der Nut (13) hin abnehmend ausgebildet ist.

8. Laufstreifenprofil gemäß den Merkmalen von einem der vorangegangenen Ansprüche,
wobei mehrere - insbesondere zwei - derartige im Profilelement (5,6) ausgebildete Nuten (13^{IV}, 13^{VI}, 13^{II}, 13^{III}, 13^{V}, 13^{VI}, 13^{III}, 13^{I}) in der Position ihres tiefsten Punktes unter Einschluss eines Winkels δ ihrer Erstreckungsrichtung in einander münden.

9. Laufstreifenprofil gemäß den Merkmalen von Anspruch **8**,
wobei zwei derartige im Profilelement (5,6) ausgebildete Nuten (13^{IV}, 13^{VI}, 13^{II}, 13^{III}, 13^{V}, 13^{VI}, 13^{III}, 13^{I}) in der Position ihres tiefsten Punktes unter Einschluss eines Winkels δ mit 45°≤δ≤135° ihrer Erstreckungsrichtung in einander münden.

10. Laufstreifenprofil gemäß den Merkmalen von Anspruch 1,
wobei die Position des tiefsten Punktes der Nut (13) in einer das Profilelement (1) begrenzenden Rillenwand positioniert ist.

11. Laufstreifenprofil gemäß den Merkmalen von Anspruch 1,
wobei die Position des tiefsten Punktes der Nut (13, 13^{I}) mit Abstand zu den das Profilelement (2,4) begrenzenden Rillen (8,10) positioniert ist.

12. Laufstreifenprofil gemäß den Merkmalen von einem der vorangegangenen Ansprüche,
wobei das Laufstreifenprofil als Offroadprofil ausgebildet ist.

## Claims

1. Tread profile of a vehicle tyre - in particular a utility vehicle tyre - having profile elements (1, 2, 3, 4, 5, 6) which are separated from one another by channels (7, 8, 9, 10, 11) and which are delimited radially outwardly by a radially outer surface (12), and having additional shallow grooves (13) which are formed in the radially outer surface (12) of profile elements (1, 2, 3, 4, 5, 6) and which are delimited inwardly in the radial direction R by a groove base (14), and is formed with decreasing depth T along the extent of the groove (13), starting from a position of the greatest depth T_{MAX} of the groove (13) up to the extent end of the groove (13) pointing away from the deepest point,
wherein the groove base (14) is formed with a constantly rising depth profile along the extent of the groove (13), starting from a position of the greatest depth T_{MAX} of the groove (13) up to the extent end of the groove (13) pointing away from the deepest point and formed in the radially outer surface (12), and
wherein, at least in a first extent portion which extends as far as the extent end in the radially outer surface (12), the depth profile of the groove base (14) is formed such that it rises in a degressive curve and with a tangential transition to the radially outer surface (12), wherein the depth profile of the groove (13) is formed with a depth profile which rises in a curve along its entire extent, starting from the position of the greatest depth T_{MAX} up to the extent end of the groove (13) pointing away from the deepest point and formed in the radially outer surface (12),
wherein along its extent, the groove is delimited on both sides of the groove base by a respective groove flank, which each extend from the radially outer surface inwardly in the radial direction R, so as to enclose a tilt angle, measured in the section planes perpendicular to the extension direction of the groove, with respect to the radial direction R, as far as the groove base, wherein along the extent of the groove, in the section planes perpendicular to the extension direction of the groove, the one flank is formed with a tilt angle α, the minimum αmin thereof formed in the groove, and the other flank is formed with a tilt angle β, the minimum βmin thereof formed in the groove,
**characterized**
**in that** along the extent of the groove (13), starting from the position of the deepest point T_{MAX}, in which α is αmin and β is βmin, up to the extent end of the groove (13) pointing away from the deepest point and formed in the radially outer surface (12), at least one - in particular both - flank(s) (15, 16) are formed with a flank angle which increases, in particular continuously, wherein the flank angle(s) has/have their maximum value of 90° in the extent end.

2. Tread profile according to the features of Claim 1, wherein in a second extent portion - in particular starting from a position of greatest depth T_{MAX} of the groove (13) and extending up to the first extent end -, the groove base (14) is formed with a depth profile which rises substantially linearly along the extent of the groove (13), starting from a position of the greatest depth T_{MAX} of the groove (13) up to the extent end of the groove (13) pointing away from the deepest point.

3. Tread profile according to the features of Claim 1, wherein the depth profile of the groove (13) is formed with a depth profile which rises in a degressive curve along its entire extent, starting from the position of the greatest depth T_{MAX} up to the extent end of the groove (13) pointing away from the deepest point and formed in the radially outer surface (12).

4. Tread profile according to the features of Claim 3, wherein the depth profile of the groove (13) is formed so as to rise in a curve, with a turning point WP of the direction of curvature, along its extent starting from the position of the greatest depth T_{MAX} up to the extent end of the groove (13) pointing away from the deepest point and formed in the radially outer surface (12), wherein in particular, in a second extent portion extending up to the first extent end, the groove base (14) is formed with a depth profile which rises in a progressive curve along the extent of the groove (13), starting from the position of the greatest depth T_{MAX} of the groove (13), and the turning point of the direction of curvature of the depth profile is formed in the transition between the second and first extent portions.

5. Tread profile according to the features of any of the preceding claims,
wherein the minimum αmin is 20°≤αmin≤60° and the minimum βmin is 20°≤βmin≤60°.

6. Tread profile according to the features of any of the preceding claims,
wherein along the extent of the groove (13), starting from the deepest point of the groove (13) up to the extent end of the groove (13) pointing away from the deepest point and formed in the radially outer surface (12), the two flanks (15, 16) intersect at their radially inner extent end and thus form a linear groove base (14) in the section line.

7. Tread profile according to the features of one or more of Claims 1 to 5,
wherein along the extent of the groove (13), starting from the deepest point of the groove towards the extent end of the groove (13) pointing away from the deepest point and formed in the radially outer surface (12), the two flanks (15, 16) intersect, in the section planes formed perpendicularly to the extension direction, at a distance from each other which forms the width B of the groove base (14), wherein the distance and hence the width B of the groove base (14) is formed so as to decrease along the extent of the groove (13), starting from the deepest point of the groove (13) in the direction of the extent end of the groove (13) pointing away from the deepest point and formed in the radially outer surface (12).

8. Tread profile according to the features of any of the preceding claims,
wherein several - in particular two - such grooves (13^{IV}, 13^{VI}, 13^{II}, 13^{III}, 13^{V}, 13^{VI}, 13^{III}, 13^{I}) formed in the profile element (5, 6) open into each other at the position of their deepest point so as to enclose an angle δ of their extension direction.

9. Tread profile according to the features of Claim 8,
wherein two such grooves (13^{IV}, 13^{VI}, 13^{II}, 13^{III}, 13^{V}, 13^{VI}, 13^{III}, 13^{I}) formed in the profile element (5, 6) open into each other at the position of their deepest point so as to enclose an angle δ of their extension direction, with 45°≤δ≤135°.

10. Tread profile according to the features of Claim 1,
wherein the position of the deepest point of the groove (13) is positioned in a channel wall delimiting the profile element (1).

11. Tread profile according to the features of Claim 1,
wherein the position of the deepest point of the groove (13, 13^{I}) is positioned at a distance from the channels (8, 10) delimiting the profile element (2, 4).

12. Tread profile according to the features of any of the preceding claims,
wherein the tread profile is configured as an off-road profile.

## Revendications

1. Profil de bande de roulement d'un pneumatique de véhicule - en particulier d'un pneumatique de véhicule utilitaire - comprenant des éléments profilés (1, 2, 3, 4, 5, 6) séparés les uns des autres par des rayures (7, 8, 9, 10, 11) et qui sont délimités radialement vers l'extérieur par une surface radialement extérieure (12) et comprenant des rainures peu profondes (13) supplémentaires qui sont réalisées dans la surface radialement extérieure (12) d'éléments profilés (1, 2, 3, 4, 5, 6) et sont délimitées dans la direction radiale R vers l'intérieur par un fond de rainure (14), et est réalisé le long de l'étendue de la rainure (13) en partant d'une position de la plus grande profondeur T_{MAX} de la rainure (13) jusqu'à l'extrémité d'étendue de la rainure (13), détournée du point le plus bas, avec une profondeur T décroissante, le fond de rainure (14) étant réalisé le long de l'étendue de la rainure (13) en partant d'une position de la plus grande profondeur T_{MAX} de la rainure (13) jusqu'à l'extrémité d'étendue de la rainure (13), détournée du point le plus bas et qui est réalisée dans la surface radialement extérieure (12), avec un tracé de profondeur croissant en continu, et dans lequel, au moins dans une première partie d'étendue atteignant l'extrémité d'étendue dans la surface radialement extérieure (12), le tracé de profondeur du fond de rainure (14) est réalisé à croissance dégressive courbe et avec une transition tangentielle à la surface radialement extérieure (12), le tracé de profondeur de la rainure (13) étant réalisé le long de toute son étendue en partant de la position de la plus grande profondeur T_{MAX} jusqu'à l'extrémité d'étendue de la rainure (13), détournée du point le plus bas, dans la surface radialement extérieure (12) avec un tracé de profondeur à croissance courbe, la rainure étant délimitée le long de son étendue des deux côtés du fond de rainure respectivement par un flanc de rainure qui s'étend de la surface radialement extérieure dans la direction radiale R vers l'intérieur, respectivement en formant un angle d'inclinaison mesuré dans les plans de coupe perpendiculairement à la direction d'étendue de la rainure par rapport à la direction radiale R, jusqu'au fond de rainure, dans lequel, le long de l'étendue de la rainure, dans les plans de coupe perpendiculairement à la direction d'étendue de la rainure, ledit un flanc est réalisé avec un angle d'inclinaison α dont le minimum réalisé dans la rainure est αmin et l'autre flanc est réalisé avec un angle d'inclinaison β dont le minimum réalisé dans la rainure est βmin,
**caractérisé en ce que** le long de l'étendue de la rainure (13) en partant de la position du point le plus bas T_{MAx}, où α est réalisé avec αmin et β est réalisé avec βmin, jusqu'à l'extrémité d'étendue de la rainure (13), détournée du point le plus bas et réalisée dans la surface radialement extérieure (12), au moins un flanc, en particulier les deux flancs (15, 16), sont réalisés avec un angle de flanc croissant, en particulier en continu, le(s) angle(s) de flanc présentant leur valeur maximale de 90° à l'extrémité d'étendue.

2. Profil de bande de roulement selon les particularités de la revendication 1, dans lequel le fond de rainure (14) est réalisé le long de l'étendue de la rainure (13) en partant d'une position de la plus grande profondeur T_{MAX} de la rainure (13) jusqu'à l'extrémité d'étendue de la rainure (13), détournée du point le plus bas, dans une deuxième partie d'étendue - s'étendant en particulier en partant d'une position de la plus grande profondeur T_{MAX} de la rainure (13) jusqu'à la première extrémité d'étendue - ayant un tracé de profondeur croissant substantiellement en ligne droite.

3. Profil de bande de roulement selon les particularités de la revendication 1, dans lequel le tracé de profondeur de la rainure (13) est réalisé le long de toute son étendue en partant de la positon de la plus grande profondeur T_{MAX} jusqu'à l'extrémité d'étendue de la rainure (13), détournée du point le plus bas, dans la surface radialement extérieure (12) avec un tracé de profondeur à croissance dégressive courbe.

4. Profil de bande de roulement selon les particularités de la revendication 3, dans lequel le tracé de profondeur de la rainure (13) est réalisé le long de son étendue en partant de la position de la plus grande profondeur T_{MAX} jusqu'à l'extrémité d'étendue de la rainure (13), détournée du point le plus bas, dans la surface radialement extérieure (12) à croissance courbe avec un point d'inflexion WP de la direction de courbure, dans lequel en particulier le fond de rainure (14) est réalisé le long de l'étendue de la rainure (13) en partant de la position de la plus grande profondeur T_{MAX} de la rainure (13) dans une deuxième partie d'étendue s'étendant jusqu'à la première extrémité d'étendue et ayant un tracé de profondeur à croissance progressive courbe, et le point d'inversion de la direction de courbure du tracé de profondeur est réalisé à la transition entre la deuxième et la première partie d'étendue.

5. Profil de bande de roulement selon les particularités de l'une quelconque des revendications précédentes, dans lequel le minimum αmin est réalisé avec 20° ≤ αmin ≤ 60° et le minimum βmin est réalisé avec 20° ≤ βmin ≤ 60°.

6. Profil de bande de roulement selon les particularités de l'une quelconque des revendications précédentes, dans lequel, le long de l'étendue de la rainure (13), en partant du point le plus bas de la rainure (13) jusqu'à l'extrémité d'étendue de la rainure (13), détournée du point le plus bas et réalisée dans la surface radialement extérieure (12), les deux flancs (15, 16) s'intersectent à leur extrémité d'étendue radialement intérieure et forment alors dans la ligne d'intersection un fond de rainure linéaire (14).

7. Profil de bande de roulement selon les particularités d'une ou de plusieurs des revendications 1 à 5, dans lequel les deux flancs (15, 16) s'intersectent le long de l'étendue de la rainure (13) en partant du point le plus bas de la rainure jusqu'à l'extrémité d'étendue de la rainure (13), détournée du point le plus bas et réalisée dans la surface radialement extérieure (12), dans les plans de coupe formés perpendiculairement à la direction d'étendue, à une distance l'une de l'autre qui forme la largeur B du fond de rainure (14), la distance, et donc la largeur B, du fond de rainure (14) étant réalisée en diminuant le long de l'étendue de la rainure (13) en partant du point le plus bas de la rainure (13) en direction de l'extrémité d'étendue de la rainure (13), détournée du point le plus bas et réalisée dans la surface radialement extérieure (12).

8. Profil de bande de roulement selon les particularités de l'une quelconque des revendications précédentes, dans lequel plusieurs - en particulier deux - rainures (13^{IV}, 13^{VI}, 13^{II}, 13^{III}, 13^{V}, 13^{VI}, 13^{III}, 13^{I}) de ce type, réalisées dans l'élément profilé (5, 6), débouchent les unes dans les autres à la position de leur point le plus bas en formant un angle δ de leur direction d'étendue.

9. Profil de bande de roulement selon les particularités de la revendication 8, dans lequel deux rainures (13^{IV}, 13^{VI}, 13^{II}, 13^{III}, 13^{V}, 13^{VI}, 13^{III}, 13^{I}) de ce type, réalisées dans l'élément profilé (5, 6), débouchent l'une dans l'autre à la position de leur point le plus bas en définissant un angle δ, où 45° ≤ δ ≤ 135°, de leur direction d'étendue.

10. Profil de bande de roulement selon les particularités de la revendication 1, dans lequel la position du point le plus bas de la rainure (13) est positionnée dans une paroi de rayure délimitant l'élément profilé (1).

11. Profil de bande de roulement selon les particularités de la revendication 1, dans lequel la position du point le plus bas de la rainure (13, 13^{I}) est positionnée à distance des rayures (8, 10) délimitant l'élément profilé (2, 4).

12. Profil de bande de roulement selon les particularités de l'une quelconque des revendications précédentes, dans lequel le profil de bande de roulement est réalisé sous la forme d'un profil tout-terrain.
